# EUROPEAN PATENT APPLICATION

(11) **EP 4 112 977 A1**
(43) Date of publication of application: **04.01.2023**
(21) Application number: 21182575.7
(22) Date of filing: 29.06.2021
(51) Int. Cl.: F16K 5/06, F16K 37/00

(54) **VALVE-POSITION SENSOR SYSTEM**

(71) Applicant: ABB SCHWEIZ AG, 5400 Baden (CH)
(72) Inventor: SOSALE, Guruprasad, 80997 München (DE); MENDOZA, Francisco, 69198 Schriesheim (DE); PRADEEP, Neethu Thusath, 682017 Kaloor, Cochin, Kerala (IN); BREISCH, Sebastian, 69239 Neckarsteinach (DE)
(74) Representative: Maiwald GmbH

(57) **Abstract**

The present invention relates to a valve-position sensor system for a manual valve (10, 54). The valve-position sensor system comprises at least one permanent magnet (22), which is attached to a movable component (14, 66) of the valve (10, 54), which is movable with the actuation of a valve handle (10, 58) to conduct a linear or rotational movement, a magnetic field sensor (30) accommodated in a sensor housing (34), wherein the magnet (22) is movable with respect to the sensor housing (34), so that the magnetic field of the magnet (22) is detectable by the magnetic field sensor (30), and a processing unit (46), which determines a valve position from the specific measured magnetic field strength of the magnet (22) in at least two positions of the valve (10, 54).

## Description

### FIELD OF THE INVENTION

The present invention relates to a valve-position sensor system for a manual valve and a method for determining the position of a valve using such a valve-position sensor system.

### BACKGROUND OF THE INVENTION

Manual and automated valves are installed in vast quantities in many different types of processing plants. Large quantities are installed in the oil and gas industry, pulp & paper, chemical, pharmaceutical and similar processing plants.

In many such applications, it is important to know the valve positions of the valves within a system in order to ensure the correct functioning of the system and to ensure safety. The need to determine and record the positions of the valves in a system is vital for both optimum process control during operation but also for maintenance, for example when a system must be safely shut down or particular components isolated.

In known systems, generally only control valves with a cabled connection to the control panel or operating system allows for direct reporting to the operator or control system. The position of all other valves normally requires physical and/or visual inspection by the operator.

In larger plants with more complex piping systems and process flows spread over a larger area it becomes more difficult to manually determine the positions of valves. Cabled monitoring equipment is available however, the cost of such equipment precludes their application of cabled sensors on more than just a small proportion of the valves in the system and also prevents the use of such equipment over large areas such as in the oil and gas industry.

Prior art EP 3 543 573 A1 discloses a valve having a device monitoring a state of a rotatable handle of the valve. The device is mounted to a lever or a rotatable wheel of the valve. The device comprises a vector magnetometer, with which the magnetic field of the earth can be measured. The device further comprises a battery for powering the device and a wireless interface for transmitting the actual position of the valve.

In WO 2018/193058 A1, a valve position sensor is disclosed. The valve position sensor comprises a sensor housing for placement on an outside of a moveable part of a valve. A printed circuit board assembly of the position sensor comprises a microsensor, wherein the microsensors including a magnetometer. The valve position sensor further comprises a processing unit configured to receive data from the magnetometer and compare the received magnetometer data with calibration data to determine a position of the valve based on the orientation of the magnetometer relative to the surrounding geomagnetic field. The sensor also includes a transmitter for wirelessly transmitting event data including valve position data to an external receiver.

A drawback of the existing solutions is that the systems are not usable for different valve types. Further, in order to provide a respective valve with a position sensor, an existing valve usually has to be exchanged. Exchanging all valves by new valves is time consuming and expensive. A further drawback is that the vector magnetometer is expensive.

### SUMMARY OF THE INVENTION

The problem to be solved by the present invention is to provide a system for measuring the valve position of a manual valve, which can be used for different valve types and which can be easily retrofitted to existing valves. Further, such a system shall be simple and economically.

The problem is solved by a valve-position sensor system for a manual valve according to claim 1 and a method for determining the position of the valve having the features according to claim 10. Advantageous embodiments of the invention are specified in the dependent claims.

According to the invention, a valve-position sensor system for a manual valve is proposed. The valve-position sensor system comprises at least one permanent magnet, which is attached to a movable component of the valve, which is movable with the actuation of a valve handle to conduct a linear or rotational movement. The movable component thereby is an outer part of the valve, which already exists. In other words, no additional movable components have to be added to provide the valve-position sensor system. The valve-position sensor system therefore easily can be retrofitted. The movable part preferably conducts a movement, which corresponds to the valve position.

The valve-position system further comprises a magnetic field sensor accommodated in a sensor housing, wherein the magnet is movable with respect to the sensor housing, so that the magnetic field of the magnet is detectable by the magnetic field sensor. With the magnetic field sensor, the magnetic field generated by the magnet is measured. The magnetic field sensor preferably is a magnetometer. While the magnet changes its position, the magnetic field sensor remains stationary. Preferably, the sensor housing can be arranged to a fixed structure. The fixed structure may be an already existing structure or a structure, which easily can be provided without dismounting the valve. Thus, the system can be economically retrofitted to existing valves.

Further, the valve-position system comprises a processing unit, which determines a valve position from the specific measured magnetic field strength of the magnet in at least two positions of the valve. Dependent on the distance between the sensor and the magnet the magnetic field strength changes, so that with increasing distance the magnetic field strength decreases. On the basis of the measured value it is possible to determine the valve position. The processing unit thereby may be provided in the sensor housing or a remote location.

In a preferred embodiment of the invention, the sensor housing additionally accommodates a communication unit, with which the measured magnetic field strength or the valve position is wirelessly transmitted. The communication unit thereby may transmit the data via e.g. Bluetooth, WiFi, ZigBee or mobile network. The communication unit has the advantage that no cable connection is needed. In particular, such a transmission would be necessary if the valve is at a position, which is far away from an operator location. With such a communication unit, it is possible to retrofit existing valves without providing extra cables.

In a further preferred embodiment, the magnetic field sensor is a one-axis sensor. The measuring axis in which the magnetic field is sensed thereby is perpendicular to the orientation of the polarity of the magnet. A one-axis sensor has the effect that the calculation of the valve position is easier, as merely a linear function for a calculation algorithm is required. Further, with a one-axis sensor the power consumption of the respective sensor can be reduced, so that a battery of the sensor has to be replaced less often. Such a sensor additionally is much cheaper than a three-axis sensor. A respective valve-position sensor system therefore can be economically provided.

Advantageously, two magnets are provided, which are arranged to have opposing polarities with respect to the magnetic field sensor, so that the polarity changes between an opened and closed valve position. In other word, the magnets are arranged on the movable component so that in the moving direction, the magnetic field between both end positions changes from one polarity to the other polarity. The pole arranged opposite the sensor, in both end positions therefore is different. With such an arrangement both end positions can be definitely differentiated. Further, the magnetic field continuously changes between both end positions, so that also every intermediate position can be differentiated. From this, it follows, that the valve position can be determined more accurately.

Preferably, one magnet is provided, which is arranged close to the magnetic field sensor either in the opened position or in the closed position of the valve. In other words, only one magnet is necessary. The valve-position sensor system thereby would be simplified, as merely one magnet is measured.

In a further advantageous development, the magnets are provided such, that the total magnetic field strength measured in a closed position of the valve is different to the total magnetic field strength measured in an opened position. In other words, the absolute value in one position, e.g. opened position, is higher than the absolute value in another position, e.g. closed position. This can be achieved by providing different sizes for the magnets, so that one magnet has a higher magnetic field. The absolute value can also be influenced by a different distance between the magnet and the sensor, so that the magnetic field of the magnet having a closer distance is higher. This feature has the effect that the closed position and the opened position can be better differentiated.

In a preferred embodiment, the movable component is a translational plate or the handle of the valve. The translation plate is a part of an e.g. multiturn globe valve, which already exists, and which is provided at the rotation shaft of the valve. By rotating the hand-wheel handle, the translational plate conducts a linear upwards or downwards movement, corresponding to the valve position. The handle of a ball valve thereto, conducts a rotational movement. However, also this movement corresponds to the valve position, so that with a magnet fixed to the translational plate, the valve position can be determined. As the handle and the translational plate are existing parts, it is easy to retrofit the valve-position sensor system to valves.

A preferred embodiment specifies that the manual valve is a quarter-turn ball valve. Such valves have a simple construction, while having a high reliability. Alternatively, the manual valve is a multiturn globe valve. Such a valve has good shutoff capability. Further, the globe valves also have good throttling capability. The valve-position sensor system can be used for at least both named valves. However, the valve-position sensor also can be used for other valves. Accordingly, the valve-position sensor system is not limited to one specific valve type, so that it can be used for various different valve types. This system therefore has a high operation capability.

Preferably, the sensor housing is arranged offset to the piping direction. The sensor housing and therewith the magnetic field sensor are not arranged above the pipes. The sensor therefore is provided more distantly to the pipes. As these pipes may transport a medium having a high temperature, this distance result in a temperature drop at the sensor. The sensor housing and the sensor therefore need not to be designed to withstand high temperatures. Further, it is possible to provide a sensor designed for lower temperature, which is much cheaper. Accordingly, a valve-position sensor system can be provided, which is more economically. Apart from this, it is possible using the valve-position sensor system for valves used with high temperature media.

The problem to be solved by the present invention also is solved by a method for determining the position of a valve using such a valve-position sensor system. The method comprising the steps of measuring the magnetic field density, and determining the valve position from known magnetic field strength values for different valve positions or by means of a calculation. This method essentially provides the same advantages outlined for the valve-position sensor system.

In a preferred embodiment, the valve position is determined locally in the sensor housing or at a remote location. By calculating the valve position at a remote location, the sensor housing does not need a processing unit for determining the valve position. However, such a processing unit requires battery power, so that without a processing unit battery power can be saved. Accordingly, the battery last longer. Further, the sensor housing can be provided much smaller, so that a respective sensor with sensor housing is much cheaper. Apart from this, a processing unit at a remote location can process the measured values of several valves, so that one processing unit is required, only. A processing unit provided locally thereto has the advantage that the valve position can be directly retrieved. Further, these positions can be directly transmitted to a cloud solution by means of a mobile device, dedicated gateway or mobile network.

In a further preferred embodiment, the known magnetic field strengths are learned by a calibration process. In this calibration process, the user turns the handle to the opened and closed position as well as to several intermediate position. In each position, the magnetic field is measured, so that the processing unit learns different magnetic field strengths at different handle positions. This method is an easy way to calibrate the valve-position sensor system. Further, with this calibration method it is possible fastly recalibrating this system.

The present invention further refers to a valve comprising such a valve-position sensor system. With such a valve, the aforementioned advantages are achieved.

### BRIEF DESCRIPTION OF THE DRAWINGS

The subject matter of the Invention will be explained in more details in the following description illustrated in the drawings, in which:
- Figure 1a: Side view of a quarter-turn ball valve in an opened position with a valve-position sensor system, according to a first embodiment of the invention,
- Figure 1b: Top view of the valve according to figure 1a,
- Figure 2: Top view of the valve according to figure 1a in a closed position,
- Figure 3: Top view of a quarter turn ball valve in a closed position with a valve-position sensor system, according to a second embodiment of the invention,
- Figure 4a: First side view of a multiturn globe valve, according to an embodiment of the invention,
- Figure 4b: Second side view of the multiturn globe valve of figure 4a in an opened position,
- Figure 4c: Side view according to figure 4b in a closed position of the valve, and
- Figure 5: Example diagram of the magnetic field density dependent on the valve position.

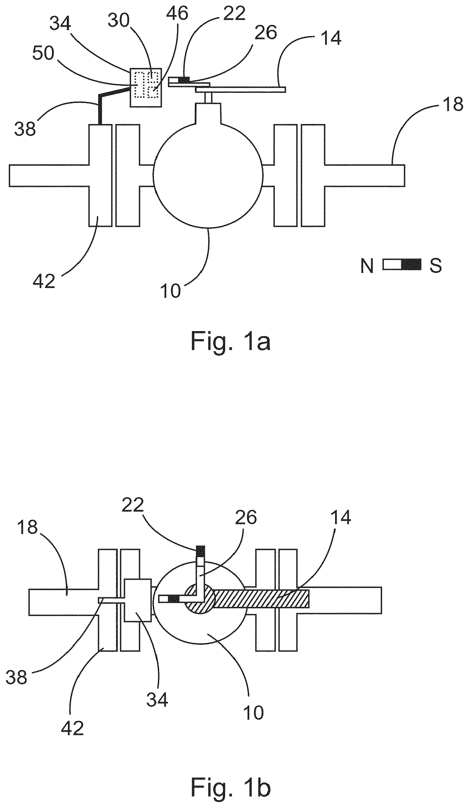

Figure 1a shows a side view of a quarter-turn ball valve 10 in an opened position with a valve-position sensor system, according to a first embodiment of the invention. The ball valve 10 is a manual valve and comprises a handle 14 for opening and closing the valve 10 so that a medium can flow through the pipes 18. In order to determine the position of the handle 14, the ball valve 10 comprises the valve-position sensor system. The valve-position sensor system in this embodiment comprises two permanent magnets 22. The permanent magnets 22 are arranged on a mounting bracket 26, which is fixed to the valve handle14. Figure 1b, presenting a top view of the valve according to figure 1a, shows that the mounting bracket 26 comprises two legs arranged orthogonal to each other. The magnets 22 are arranged at an outer end of the legs. Both magnets 22 are thereby arranged, so that the polarity N, S at the outer end differ between both magnets 22. In other words, the polarity N, S of the magnets 22, pointing to the radial outer side, differ between both magnets 22.

The valve-position sensor system further comprises a magnetic field sensor 30, which is arranged in a sensor housing 34. The magnetic field sensor 30 is indicated for figure 1a, only. The sensor housing 30 is arranged at a fixed structure 38, which is provided by a flange 42 of the pipe 18. The magnetic field sensor 30 is provided opposite to one magnet 22, when the valve 10 is in an opened or closed position, so as to measure the magnetic field strength. The sensor housing 34 additionally accommodates a processing unit 46, which determines a valve position from the specific measured magnetic field strength of the magnets 22. In order to transmit the valve position to a remote location, a communication unit 50 additionally is provided in the sensor housing 34. With this communication unit 50, a wireless communication is possible.

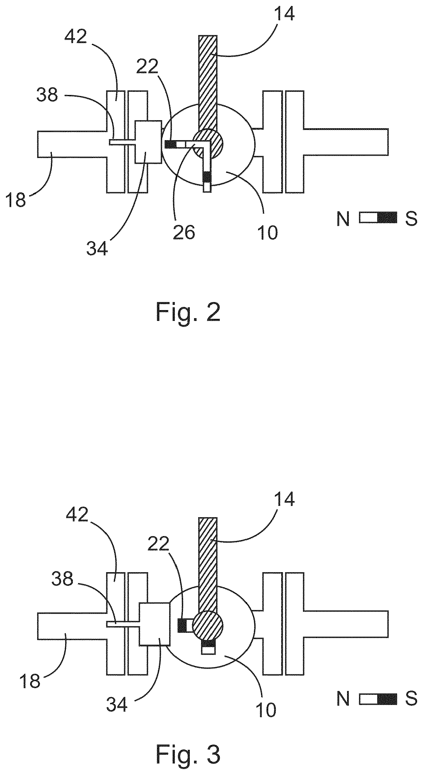

Figure 2 shows a top view of the valve 10 according to figure 1a in a closed position. This figure shows that the handle 14 is positioned orthogonal to the position of figure 1a. In contrast to the opened position of figure 1a, the polarity S is now pointing to the magnetic field sensor 30. The magnetic field strength between the opened position and the closed position thereby changes.

In a further embodiment not shown in the figures, only one magnet 22 can be provided, which is close to the magnetic field sensor 30 in a closed or opened position of the handle 14. Thus, the magnetic field in this position would be maximal. In the other position, the magnetic field thereby would be minimal. Accordingly, the magnetic field changes between the closed and the opened position.

Figure 3 shows a top view of a quarter-turn ball valve 10 in a closed position with a valve-position sensor system according to a second embodiment of the invention. This embodiment differs to the first embodiments of the figures 1 and 2 in that no mounting braked 26 is used. In this embodiment, the permanent magnets 22 directly are fixed to the handle 14. Also in this embodiment, the polarity N, S of the magnet 22 opposing the sensor housing 34 in the open position differs to the polarity N, S of the magnet 22 in the closed position.

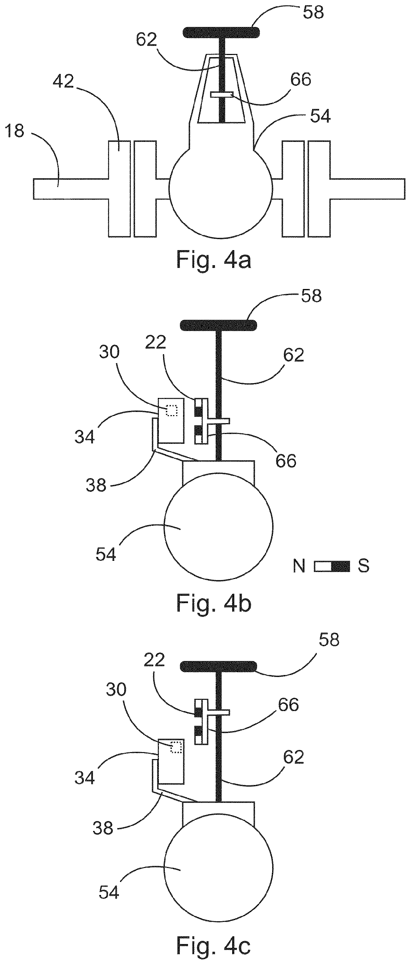

In figure 4a, a first side view of a multiturn globe valve 54 according to an embodiment of the invention is shown. In this embodiment, a hand-wheel handle 58 is used. With the hand-wheel handle 58, a shaft 62 is rotated, so that a valve body (not shown) can be opened or closed. At the shaft 62 a translation plate 66 is provided, which is linearly moved upward or downward, when the hand-wheel handle 58 is turned. A better view of the translation plate 66 is shown in figure 4b, which shows a second side view of the multiturn globe valve 54 of figure 4a in an opened position. This figure shows that two permanent magnets 22 are provided on the translation plate 66. The magnets 22 are arranged on the translation plate 66 one above the other. A polarity N, S of the magnets 22 are arranged such, that the same polarity, i.e. the polarity S, is directing to the other magnet 22, wherein the polarity N is pointing upwards or downwards.

In the opened position, the upper magnet 22 is positioned opposite to the magnetic field sensor 30, so that the magnetic field strength of the upper magnet 22 is measured. When the hand-wheel handle 58 is turned to close the globe valve 54, as shown in figure 4c, the translation plate 66 is moved linearly upwards. Thereby, the magnetic field sensor 30 increasingly measures the magnetic field of the lower magnet 22. In the fully closed position, the magnetic field sensor 30 measures the magnetic field of the lower magnet 22, which polarity N, S is opposite to the polarity N, S of the upper magnet 22.

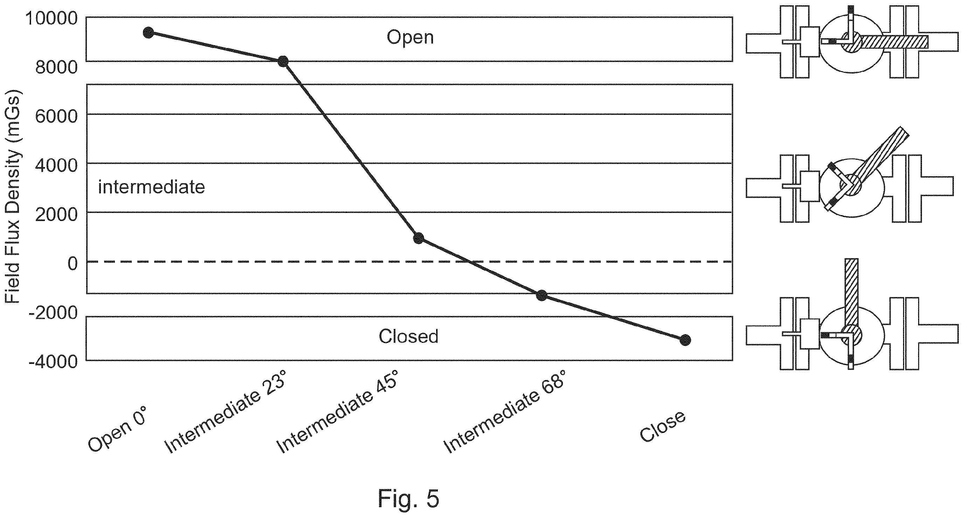

Figure 5 shows an example diagram of the magnetic field density dependent on the valve position. This diagram shows that in a specific bandwidth of the magnetic field strength, it is assumed that the valve 10, 54 is in an opened position. Respectively, there is bandwidth where it is assumed that the valve 10, 54 is in an intermediate position and a bandwidth where it is assumed that the valve 10, 54 is closed. These positions also are illustrated by the handle positions of the valve 10 shown next to the diagram. This diagram further shows that the magnetic field strength decreases when closing the valve 10. Dependent on the measured field strength it is possible to determine the valve position. The total magnetic field strength in the opened position is higher, than the total magnetic field strength in the closed position. This is achieved by e.g. using magnets having different sizes.

### List of reference numbers

- 10: quarter turn ball valve
- 14: handle
- 18: pipe
- 22: permanent magnet
- 26: mounting bracket
- 30: magnetic field sensor
- 34: sensor housing
- 38: fixed structure
- 42: flange
- 46: processing unit
- 50: communication unit
- 54: multiturn globe valve
- 58: hand-wheel handle
- 62: shaft
- 66: translation plate
- N: polarity
- S: polarity

## Claims

1. A valve-position sensor system for a manual valve (10, 54) comprising:
at least one permanent magnet (22), which is attached to a movable component (14, 66) of the valve (10, 54), which is movable with the actuation of a valve handle (10, 58) to conduct a linear or rotational movement,
a magnetic field sensor (30) accommodated in a sensor housing (34), wherein the magnet (22) is movable with respect to the sensor housing (34), so that the magnetic field of the magnet (22) is detectable by the magnetic field sensor (30), and
a processing unit (46), which determines a valve position from the specific measured magnetic field strength of the magnet (22) in at least two positions of the valve (10, 54).

2. Valve-position sensor system according to claim 1, **characterized in that** the sensor housing (30) additionally accommodates a communication unit (50), with which the measured magnetic field strength or the valve position is wirelessly transmitted.

3. Valve-position sensor system according to claim 1 or 2, **characterized in that** the magnetic field sensor (30) is a one-axis sensor.

4. Valve-position sensor system according to one of the preceding claims, **characterized in that** two magnets (22) are provided, which are arranged to have opposing polarities (N, S) with respect to the magnetic field sensor (30), so that the polarity (N, S) changes between an opened and closed valve position.

5. Valve-position sensor system according to claims 1 to 3, **characterized in that** one magnet (22) is provided, which is arranged close to the magnetic field sensor (30) either in the opened position or in the closed position of the valve (10, 54).

6. Valve-position sensor system according to one of the preceding claims, **characterized in that** the magnets (22) are provided such that the total magnetic field strength measured in a closed position of the valve (10, 54) is different to the total magnetic field strength measured in an opened position.

7. Valve-position sensor system according to one of the preceding claims, **characterized in that** the movable component (14, 66) is a translational plate (66) or the handle (14) of the valve (10, 54).

8. Valve-position sensor system according to one of the preceding claims, **characterized in that** the manual valve (10) is a quarter-turn ball valve.

9. Valve-position sensor system according to claims 1 to 7, **characterized in that** the manual valve (54) is a multiturn globe valve.

10. Valve-position sensor system according to one of the preceding claims, **characterized in that** the sensor housing (34) is arranged offset to the piping direction.

11. Method for determining the position of a valve (10, 54) using a valve-position sensor system according to one of the preceding claims, comprising the steps:
- Measuring the magnetic field density, and
- Determining the valve position from known magnetic field strength values for different valve positions or by means of a calculation.

12. Method according to claim 11, **characterized in that** the valve position is determined locally in the sensor housing (30) or at a remote location.

13. Method according to claim 11 or 12, **characterized in that** the known magnetic field strengths are learned by a calibration process.

14. Valve (10, 54) comprising a valve-position sensor system according to one of the claim 1 to 10.
